# EUROPÄISCHE PATENTANMELDUNG

(11) **EP 1 288 171 A2**
(43) Veröffentlichungstag der Anmeldung: **05.03.2003**
(21) Anmeldenummer: 02017895.0
(22) Anmeldetag: 09.08.2002
(51) Int. Cl.: C03C 3/093, C03C 3/078, C03C 4/02, C03C 4/08, G02B 5/22

(54) **Optische Farbgläser**

(30) Priorität: 22.08.2001 DE 10141101
(71) Anmelder: Schott Glas, 55122 Mainz (DE)
(72) Erfinder: Kolberg, Uwe, Dr., 55252 Mainz-Kastel (DE); Hentschel, Ruediger, Dr., 55294 Bodenheim (DE); Ritter, Simone, Dr., 55116 Mainz (DE)
(74) Vertreter: Dr. Weitzel & Partner

(57) **Zusammenfassung**

Die Erfindung betrifft ein optisches Farbglas der Zusammensetzung (in Gew.-% auf Oxidbasis)SiO₂ 50 - 62; K₂O 10- 25; Na₂O 0 - 14; Al₂O₃ 0 - 2; B₂O₃ 3 - 5; ZnO 13,5 - 37; F 0 - 1; TiO₂ 0 - 7; In₂O₃ 0 - 2; Ga₂O₃ 0 - 2; SO₃ 0 - 1; SeO₂ 0 - 1; C 0 - 1; M^{I} M^{III} Y₂^{II} 0,1 - 3, wobei M' = Cu⁺ und/oder Ag⁺ und/oder M^{III}= In³⁺ und/oder Ga³⁺ und/oder Al³⁺ und/oder Y^{II} = S²⁻ und/oder, Se²⁻ und wenigstens 0,1 Gew.-% des Oxides (M₂O₃) des oder der M^{III}, das/die in M^{I} M^{III} Y^{II}₂ vorliegt/vorliegen, und mit wenigstens 0,2 Gew.-% des Oxides, des oder der Y^{II}, das/die in M^{I} M^{III} Y^{II}₂ vorliegt/vorliegen.

## Beschreibung

Gegenstand der Erfindung sind ein optisches Farbglas, seine Verwendung als optisches Steilkantenfilter sowie ein optisches Steilkantenfilter.
Gegenstand der Erfindung ist auch ein Verfahren zur Herstellung optischer Farbgläser.

Optische Steilkantenfilter zeichnen sich durch charakteristische Transmissionseigenschaften aus. So zeigen solche mit Langpaßcharakteristik im kurzwelligen Bereich eine niedrige Transmission, die über einen schmalen Spektralbereich zu hoher Transmission ansteigt und im Langwelligen hoch bleibt. Der Bereich niedriger Transmission (Reintransmissionswert τ ᵢₛ ≤ 10⁻⁵) wird als Sperrbereich bezeichnet, der Bereich hoher Transmission (Reintransmissionswert τ ᵢₚ ≥ 0,99) als Paß- oder Durchlaßbereich.

Optische Steilkantenfilter werden mittels bestimmter Kenngrößen charakterisiert. So wird die Absorptionskante eines solchen Filters üblicherweise als die sogenannte Kantenwellenlänge λ_{c} angegeben. Sie entspricht der Wellenlänge, bei der der spektrale Reintransmissionsgrad zwischen Sperr- und Durchlaßbereich die Hälfte des Maximalwerts beträgt.

Optische Steilkantenfilter werden üblicherweise durch Farbgläser realisiert, in denen durch kolloidale Ausscheidung von Halbleiterverbindungen beim Abkühlen der Schmelze oder durch nachträgliche Wärmebehandlung die Färbung erzeugt wird. Man spricht von sogenannten Anlaufgläsern.

Die marktüblichen Steilkantenfilter werden durch eine Dotierung der Grundgläser mit Cadmium-Halbleiter-Verbindungen hergestellt. Je nach Kantenlage werden dafür CdS, CdSe, CdTe oder auch Mischzusammensetzungen dieser Halbleiter verwendet. Mit diesen Steilkantenfiltern werden Kantenwellenlängen von maximal 850 nm erreicht. Für die Verwendung z. B. in IR-Kameras oder als Laserschutzglas sind aber auch längerwellige Steilkanten gewünscht. Aufgrund der toxischen und der krebserregenden Eigenschaften des Cadmiums ist es erwünscht, auf diese Verbindungen verzichten zu können und statt dessen andere Dotierungen zu verwenden. Um gleiche oder ähnliche Absorptionseigenschaften der Gläser zu erhalten, müssen alternative Dotierungen ebenfalls aus Halbleitern mit direkten optischen Übergängen bestehen, denn nur durch die spezielle Bandstruktur der Halbleiter, der Energielücke zwischen Valenz- und Leitungsband, kommt es zu den scharfen Übergängen zwischen Absorptions- und Transmissionsbereich der Gläser und somit zu den Filtereigenschaften dieser Gläser.

Eine Alternative zu den CdS-, CdSe-, CdTe-Verbindungen könnte auch das I-III-VI-Halbleitersystem darstellen, wie z.B. Kupferindiumdisulfid und Kupferindiumdiselenid.
Diese seit langem bekannten Halbleiter sind bisher lediglich in der Photovoltaik von größerer praktischer Bedeutung.

In einer Reihe russischer und sowjetischer Patentanmeldungen werden für einen sehr engen Glaszusammensetzungsbereich bereits CuInS₂ - dotierte bzw. CuInS₂-CuInSe₂-gemischt-dotierte Gläser beschrieben, die Anwendung als Filter finden sollen: SU 1677026A1, SU 1527199A1, RU 2073657C1, SU 1770297A1, SU 1770298A1, SU 1678786A1, SU 1678785A1, SU 1701658A1, SU 1677025, SU 1675239A1, SU 1675240A1 und SU 1787963A1. Allen diesen Gläsern ist gemeinsam, daß sie kein oder wenig B₂O₃ und kein oder wenig ZnO enthalten und mit Anteilen von bis zu 79 Gew.-% hoch SiO₂-haltig sind. Die Gläser dieser Schriften besitzen keine guten chemischen Beständigkeiten.

Es ist Aufgabe der Erfindung, chemisch resistente optische Cd-freie Farbgläser bereitzustellen, die Steilkantenfiltereigenschaften besitzen und zwar Absorptionskanten zwischen > 0,4 µm und 1,2 µm aufweisen.

Es ist weiter Aufgabe der Erfindung, solche Steilkantenfilter bereitzustellen.

Es ist weiter Aufgabe der Erfindung, ein Verfahren zur Herstellung optischer Farbgläser bereitzustellen.

Die Aufgaben werden durch ein Glas gemäß Anspruch 1, ein Verfahren gemäß Anspruch 9, eine Verwendung gemäß Anspruch 10 und ein Steilkantenfilter gemäß Anspruch 11 gelöst.

Als Grundglas dient ein Alkalizinksilicatglas. Das Grundglas basiert auf den Oxiden SiO₂, das die Funktion des Netzwerkbildners übernimmt, ZnO, das Netzwerkbildner- und Netzwerkwandlerfunktion hat, und K₂O und fakultativ Na₂O, die als Netzwerkwandler fungieren.

SiO₂ bildet mit 50 bis 62 Gew.-% den Hauptbestandteil des Glases. Höhere Anteile würden die Kristallisationsneigung erhöhen und die Schmelzbarkeit verschlechtern.

ZnO liegt mit 13,5 bis 37 Gew.-% vor. Es erhöht die Temperaturwechselbeständigkeit des Glases, eine Eigenschaft, die für die vorgesehene Verwendung des Glases hinter oder vor starken Strahlungsquellen, die immer mit einer starken Temperaturabstrahlung einhergehen, wesentlich ist. Außerdem unterstützt ZnO die homogene Nanokristallbildung des Dotiermaterials im Glas. D.h. bei der Temperung des Glases ist so ein homogener Kristallitwachstum der Halbleiterdotierung gewährleistet. Aus diesen monodispersen Kristalliten resultiert die sehr reine und leuchtende Farbe und die scharfe Absorptionskante der Gläser. Bei niedrigeren ZnO-Gehalten als 13,5 Gew.-% zeigen die Gläser ein schlechtes oder gar kein Anlaufverhalten. Bevorzugt ist ein ZnO-Anteil von wenigstens 18 Gew.-%. Die genannte Obergrenze an ZnO ist sinnvoll, da Gläser, die einen höheren ZnO-Gehalt aufweisen, eine Tendenz zur Bildung von tropfenartigen Ausscheidungsbereichen und somit zur Entmischung haben. Die Entmischungstendenz solcher "Zinksilicat-Gläser" kann durch den Einsatz des Netzwerkwandlers K₂O erniedrigt werden. Daher enthalten die Gläser, um Mikroausscheidungen von ZnO-angereicherten Bereichen zu verhindern und um ihre Verarbeitungstemperatur zu reduzieren, 10 bis 25 Gew.-%, bevorzugt 18 bis 25 Gew.-% K₂O. Das Glas kann zusätzlich bis zu 14 Gew.-% Na₂O enthalten, das hauptsächlich die physikalischen Eigenschaften wie die Viskositätsfixpunkte und den Ausdehnungskoeffizienten beeinflußt. Bei höheren Konzentrationen an Na₂O würde die chemische Beständkeit nachlassen, den Ausdehnungskoeffizient zu hoch und die Transformationstemperatur zu niedrig. Vorzugsweise beträgt die Summe aus K₂O und Na₂O höchstens 29 Gew.-%. Auch die anderen teureren Alkalioxide Li₂O, Rb₂O, Cs₂O sind grundsätzlich verwendbar, werden jedoch aufgrund ihres preislichen Nachteils vorzugsweise nicht eingesetzt.

Neben dem ZnO fördert auch B₂O₃ die Temperaturwechselbeständigkeit des Glases. B₂O₃ ist zu 3 bis 5 Gew.-% im Glas enthalten. B₂O₃ verbessert die Schmelzbarkeit des Glases.

Weiter kann das Glas bis zu 1 Gew.-% F enthalten. F dient der Verbesserung der Schmelzbarkeit, das heißt es senkt die Viskosität des Glases.

Das Glas kann auch bis zu 1 Gew.-% C enthalten. C dient als Reduktionsmittel, um einer Oxidation der Verbindungshalbleiter entgegenzuwirken.

Das Glas ist hervorragend geeignet für die Bildung von Nanokristallen aus Verbindungshalbleitern der Klasse I - III - VI, die kolloidal im Glas verteilt sind.

Die Nanokristallbildung wird während des Anlaufprozesses von der Glaszähigkeit, der Übersättigung, dem Löslichkeitsprodukt und der Wachstumsgeschwindigkeit der Farbträger beeinflußt. Der Anlaufprozess, der die Färbung und damit die Ausscheidung der Kristallite der Halbleiterverbindungen beinhaltet, findet entweder bereits beim Kühlen der Gläser bzw. durch eine weitere Temperaturbehandlung im Bereich Tg + ≤ 200K statt. Die Anlauftemperatur und die -zeit beeinflussen dabei die Kristallitgröße. Je größer die Kristallite werden, desto kleiner wird der Bandabstand der Halbleiter und desto langwelliger (= roter) ist die Eigenfarbe des Glases. Der Fachmann weiß diese Faktoren, soweit möglich, zu steuern.

Als farbgebende Komponenten, also als Dotiermittel zur Verleihung der Filtereigenschaften, enthalten die Gläser die Verbindungshalbleiter M^{I} M^{III} Y^{II}₂ (wobei M^{I} = Cu⁺, Ag⁺, M^{III}= In³⁺, Ga³⁺, Al³⁺, Y" = S²⁻, Se²⁻ sein können).

Die Summe der Verbindungshalbleiter im Glas beträgt mindestens 0,1 Gew.-%, was der Mindestkonzentration zur Lichtabsorption von kolloidal im Glas verteilten Mikrokristallen entspricht, und höchstens 3 Gew.-%, bevorzugt höchstens 1 Gew.-%. Höhere Gehalte als 3 Gew.-% würden die Transmission im Paßbereich nach dem Anlaufprozess unakzeptabel senken. Aus den genannten ternären Halbleitersystemen M^{I} M^{III} Y^{II}₂ sind alle Randkomponenten, also z. B. CuInS₂, CuInSe₂, CuGaS₂, CuGaSe₂, AgInS₂, AgInSe₂, AgGaS₂ und AgGaSe₂ sowie alle Mischverbindungen aus Zwei- oder Mehrkomponentensystemen verwendbar. Auch sind zwei oder mehrere Randkomponenten gleichzeitig einsetzbar.

Besonders bevorzugt sind Dotiermittel von einer oder mehreren Komponenten aus dem System CuIn(Se₁₋ₓSₓ)₂ mit x = 0 bis 1, d. h. von den Randkomponenten CuInSe₂ und CuInS₂ sowie von deren Mischverbindungen. Besonders bevorzugt ist ein Gehalt von 0,1 bis 0,5 Gew.-% Dotiermittel.
Durch Variationen der Anteile der jeweiligen Verbindungen und der Bedingungen des Anlaufprozesses kann die Absorptionskante im Bereich von 360 nm bis 1200 nm verschoben werden. Bei Gehalten zwischen 0,1 und 0,5 Gew.% Dotiermittel, insbesondere Culn (Se₁₋ₓ Sₓ)₂, sind Kantenlagen zwischen 400 nm und 1200 nm erreichbar.

Für die Eigenschaften als Anlaufglas sind die Komponenten In₂O₃ und Ga₂O₃ mit Gehalten von jeweils 0 - 2 Gew.-% sowie SO₃ und SeO₂ mit Gehalten von 0 - 1 Gew.-% sehr förderlich. Diese Komponenten wirken möglichen Verdampfungen der Komponenten In₂O₃, Ga₂O₃, S und Se aus den Verbindungshalbleitern entgegen. Somit bleibt das Chalcopyrit als die farbgebende Komponente in oder nahe an der vorgesehenen Stöchiometrie und damit an der gewünschten konkreten Kantenlage. Daher enthalten die Gläser wenigstens 0,1 Gew.-% des Oxides des oder der M^{III}, also M₂O₃, das/die in M^{I} M^{III} Y^{II}₂ vorliegt/vorliegen, und wenigstens 0,2 Gew.-% des Oxides des oder der Y^{II}, das/die in M^{I} M^{III} Y^{II}₂ vorliegt/vorliegen.

Es ist besonders bevorzugt, SO₃ bzw. SeO₂ nicht über elementares S bzw. Se, sondern in Form von ZnS bzw. ZnSe einzusetzen. Vorzugsweise werden 0,1 - 4 Gew.-% ZnS und/oder ZnSe verwendet. Beide Komponenten fördern als Hilfs-Kristallkomponente die Struktur der farbgebenden Kristalle der Halbleiterverbindungen wie CuInS₂ und CuInSe₂ und somit die Kantensteilheit und die Transmission im Paßbereich.

Mit diesem Verfahren zur Herstellung von optischen Farbgläsern des Zusammensetzungsbereichs (in Gew.-% auf Oxidbasis) SiO₂ 50 - 62; K₂O 10 - 25: Na₂O 0 - 14; MgO 0 - 4; CaO 0 - 10, BaO 0 - 10, SrO 0 - 10; P₂O₅ 0 - 10; Al₂O₃ 0 - 2; B₂O₃ 3 - 5; ZnO 13,5 - 37; F 0 - 1; TiO₂ 0 - 7; In₂O₃ 0 - 2; Ga₂O₃ 0 - 2; SO₃ 0 - 1; SeO₂ 0 - 1; C 0 - 1; und dem Dotiermittel M^{I} M^{III} Y^{II}₂ mit M^{I} = Cu⁺, Ag⁺, M^{III} = In³⁺, Ga³⁺, Al³⁺, Y^{II} = S²⁻, Se²⁻, mit wenigstens 0,1 Gew.-% des Oxides (M₂O₃) des oder der M^{III}, das/die in M^{I} M"' Y^{II}₂ vorliegt/vorliegen, und mit wenigstens 0,2 Gew.-% des Oxides, des oder der Y", das/die in M^{I} M^{III} Y^{II}₂ vorliegt/vorliegen, mit den Verfahrensschritten Gemengezubereitung, Schmelzen des Glases, Kühlen und Tempern, bei dem dem Gemenge 0,1 - 4 Gew.-% ZnS und/oder ZnSe zugesetzt werden, lassen sich leicht, gezielt und reproduzierbar Anlaufgläser mit definierter Kantenlänge herstellen. Die Anforderungen an die einzuhaltenden Bedingungen hinsichtlich Temperatur und Zeit bei den Verfahrensschritten Kühlung und Temperung sind geringer als bei herkömmlichen Verfahren.
Unter dem Begriff Schmelzen sind hier die sich an das Einschmelzen anschließenden Schritte Läutern, Homogenisieren und Konditionieren zur weiteren Verarbeitung zusammengefaßt.

Das Glas kann außerdem bis zu 4 Gew.-% MgO, bis zu 10 Gew.-% CaO, bis zu 10 Gew.-% BaO, bis zu 10 Gew.-% SrO, bis zu 10 Gew-% P₂O₅, bis zu 2 Gew.-% Al₂O₃ und bis zu 7 Gew.-% TiO₂ enthalten. Al₂O₃ verbessert die Kristallisationsfestigkeit des Glases. MgO und CaO wirken im Grundglas ähnlich wie ZnO. Durch sie wird die chemische Beständigkeit verbessert, und sie sind preiswerter als ZnO. BaO und SrO dienen der Feinabstimmung von Ausdehnungskoeffizient, Transformationstemperatur und Verarbeitungstemperatur. Da BaO und SrO jedoch teurer als die in vielen Wirkungen ähnlichen MgO und SrO sind, wird vorzugsweise auf sie verzichtet.

P₂O₅ kann als Netzwerkbildner gegen SiO₂ oder B₂O₃ z. T. ausgetauscht werden. Es ist nützlich zur Absenkung der Viskosität bei bestimmten Temperatur. P₂O₅ verringert jedoch die chemische Resistenz und wird deshalb vorzugsweise nicht verwendet.

Die Komponente TiO₂ übernimmt in diesem Glassystem vor allem die Funktion der unterstützenden UV-Blockung. Steilkantenfilter müssen im Sperrbereich eine optische Dichte erfüllen. Diese kann durch zusätzliche UV-Absorber wie TiO₂ unterstützt werden.

Die Gläser können mit Hilfe der für die bekannten Anlaufgläser üblichen Schmelzverfahren, d. h. unter neutralen bzw. reduzierenden Bedingungen bei Temperaturen von ca. 1100-1550°C, erschmolzen werden. Die Gläser bilden bereits während des Kühlungsprozesses bzw. durch eine nachträgliche Temperaturbehandlung feinverteilte Nanokristallite aus, die die Farbe bzw. das Anlaufen des Glases verursachen.

Zur Verbesserung der Glasqualität können dem Gemenge zur Läuterung des Glases ein oder mehrere an sich bekannte Läutermittel in den üblichen Mengen zugegeben werden. So weist das Glas eine besonders gute innere Glasqualität bezüglich Blasen- und Schlierenfreiheit auf.

### Beispiele:

Es wurden sechs Beispiele erfindungsgemäßer Gläser aus üblichen optischen Rohstoffen erschmolzen. Die Rohstoffe wurden abgewogen, anschließend gründlich gemischt, nach üblichen Verfahren bei ca. 1300 °C bis 1550 °C eingeschmolzen und gut homogenisiert. Die Temperatur beim Gießen betrug ca. 1450 °C.

In Tabelle 2 sind die jeweilige Zusammensetzung (in Gew.-%) und die Kantenwellenlängen λ_{c} [nm] (Probendicke d = 3 mm), Anlauftemperaturen [°C] und -zeiten [h] angegeben.

Tabelle 1 zeigt ein Schmelzbeispiel, und zwar für das Glas gemäß Beispiel 1 aus Tabelle 2. Das Glas wurde mit 20 K/h gekühlt und anschließend 3h bei ca. 560 °C getempert. Das Glas besitzt eine Kantenwellenlänge λ_{c} von 420 nm

**Tabelle 1**

| Schmelzbeispiel für eine 0,5-I-Schmelze | | | |
|---|---|---|---|
| **Komponente** | **Gew.-%** | **Rohstoff** | **Einwaage [g]** |
| SiO₂ | 52,84 | SiO₂ | 524,67 |
| B₂O₃ | 4,07 | B₂O₃ | 40,80 |
| ZnO | 19,71 | ZnO | 194,96 |
| K₂O | 22,84 | K₂CO₃ | 332,91 |
| SO₃ | 0,1 | ZnS | 1,02 |
| CuInSe₂ | 0,23 | CuInSe₂ | 2,55 |

**Tabelle 2**

| Glaszusammensetzung (in Gew.-%), Kantenwellenlänge λ_{c}, Anlauftemperatur [°C] und -zeit [h] (Die Differenz zu 100 % ergibt sich aus der Einrechnung von CuInS₂/CuInSe₂ als CuO, In₂O₃, SO₃/SeO₂) | | | | | | |
|---|---|---|---|---|---|---|
| | **1** | **2** | **3** | **4** | **5** | **6** |
| SiO₂ | 52,84 | 52,9 | 52,5 | 52 | 61,95 | 52,75 |
| B₂O₃ | 4,07 | 4,07 | 4,05 | 4 | 3 | 4,05 |
| ZnO | 19,71 | 19,74 | 19,64 | 19,4 | 13,99 | 19,68 |
| Na₂O | - | - | - | - | 8,99 | - |
| K₂O | 22,84 | 22,86 | 22,75 | 22,47 | 11,59 | 22,8 |
| SO₃ | 0,1 | 0,16 | - | - | 0,21 | - |
| CuInS₂ | - | 0,22 | - | 1 | 0,22 | 0,091 |
| CuInSe₂ | 0,23 | - | 0,5 | - | - | 0,094 |
| C | - | - | - | - | 0,05 | - |
| λ_{c}[nm] d=3mm, | 420 | 324 | 507 | 1010 | 780 | 416 |
| (Anlauftemperatur | (560/3) | (-/0) | (-/0) | (-/0) | (-/0 | (-/0) |
| [°C]/-zeit [h]) | | | | | | |
| λ_{c}[nm] d=3mm, | 460 | 415 | 613 | 1030 | 898 | - |
| (Anlauftemperatur | (560/57) | (500/150) | (560/57) | (590/150) | (595/50) | |
| [°C]/-zeit [h]) | | | | | | |
| λ_{c}[nm] d=3mm, | - | 521 | - | - | 960 | - |
| (Anlauftemperatur | | (515/150) | | | (610/150) | |
| [°C]/-zeit [h]) | | | | | | |

Die erfindungsgemäßen Gläser und die nach dem erfindungsgemäßen Verfahren hergestellten Gläser sind aufgrund ihres Transmissionsverlaufs hervorragend geeignet für die Verwendung als optische Steilkantenfilter mit Langpaßcharakteristik. Sie zeigen im Sperrbereich eine gute optische Dichte von ≥ 3, wobei die optische Dichte definiert ist als OD (λ) = Ig (1/τ(λ)). Ihre Transmission im gegenüber dem Sperrbereich längerwelligen Durchlaßbereich ist mit ≥ 88 % ausreichend hoch. Ihre Absorptionskante ist ausreichend steil. Sie läßt sich bei den mit M^{I} M^{III} Y^{II}-dotierten Gläser, bei denen M^{I} = Cu⁺, Ag⁺, M^{III} = In³⁺, Ga³⁺, Y^{II} = S²⁻, Se²⁻, zwischen 400 nm und 1200 nm verschieben. Die Gläser decken damit den Bereich von Kantenlagen von üblichen Cd-haltigen Anlaufgläsern weitestgehend ab und gehen im Langwelligen weit über diesen hinaus.

Enthalten die Gläser Al- Dotiermittel, also M^{I}-Al(S,Se)-Verbindungshalbleiter wie z. B. CuAlS₂ und CuAlSe₂ oder deren Mischverbindungen alleine oder in Kombination mit den genannten andere M^{I} M^{III} Y^{II}-Systemen, so werden Kantenlängen bis minimal 360 nm erzeugt.

Bei der ausschließlichen Verwendung der M^{I}-Al-(S,Se)-Dotiermittel, bevorzugt der Cu-AI-(S,Se)-Dotiermittel, vorzugsweise zwischen 0,1 und 0,5 Gew.-%, werden Kantenlängen zwischen 460 nm und 360 nm erzeugt.

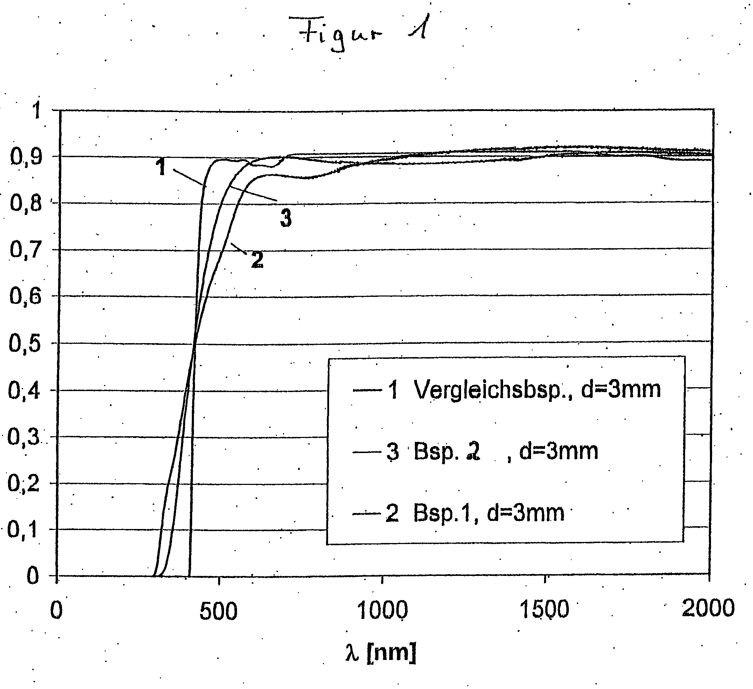

Figur 1 zeigt den Transmissionsverlauf (Transmissionsgrad τ versus Wellenlänge λ) an Proben der Dicke 3 mm der Ausführungsbeispiele 1 und 2 (Bezugsziffern 2 und 3) sowie eines Vergleichsbeispiels (Bezugsziffer 1) Das Vergleichsbeispiel ist das kommerziell erhältliche Cd-haltige Glas GG 420 der Anmelderin.

Die erfindungsgemäßen Gläser sind, da sie ohne Cd-haltige Komponenten auskommen, umweltfreundlich. Aufgrund ihrer Zusammensetzung sind sie leicht schmelzbar, chemisch resistent und temperaturwechselbeständig.

Ihr Anlaufverhalten ist leicht steuerbar. Dies gilt in besonderem Maße für die nach dem erfindungsgemäßen Verfahren hergestellten Gläser, die steile Absorptionskanten aufweisen.

## Patentansprüche

1. Optisches Farbglas
**gekennzeichnet durch**
eine Zusammensetzung (in Gew.-%) von
| | |
|---|---|
| SiO₂ | 50 - 62 |
| K₂O | 10 - 25 |
| Na₂O | 0 - 14 |
| Al₂O₃ | 0 - 2 |
| B₂O₃ | 3 - 5 |
| ZnO | 13,5 - 37 |
| F | 0 - 1 |
| TiO₂ | 0 - 7 |
| In₂O₃ | 0 - 2 |
| Ga₂O₃ | 0 - 2 |
| SO₃ | 0 - 1 |
| SeO₂ | 0 - 1 |
| C | 0 - 1 |
| M^{I}M^{III}Y₂^{II}, | 0,1 - 3 |
| wobei M^{I} = Cu⁺ und/oder Ag⁺ M^{III}= In³⁺ und/oder Ga³⁺ und/oder Al³⁺, Y^{II} = S²⁻ und/oder Se²⁻ mit wenigstens 0,1 Gew.-% des Oxides (M₂O₃) des oder der M^{III}, das/die in M^{I} M^{III} Y^{II}₂ vorliegt/vorliegen, und mit wenigstens 0,2 Gew.-% des Oxides, des oder der Y^{II}, das/die in M^{I} M^{III} Y^{II}₂ vorliegt/vorliegen, sowie ggf. übliche Läutermittel in üblichen Mengen | |

2. Optisches Farbglas nach Anspruch 1,
**gekennzeichnet durch**
eine Zusammensetzung (in Gew.-%) von
| | | |
|---|---|---|
| SiO₂ | | 50 - 62 |
| K₂O | | 18 - 25 |
| Na₂O | | 0 - 14 |
| B₂O₃ | | 3 - 5 |
| ZnO | | 13,5 - 37 |
| F | | 0-1 |
| Al₂O₃ | | 0 - 2 |
| TiO₂ | | 0 - 7 |
| In₂O₃ | | 0 - 2 |
| Ga₂O₃ | | 0 - 2 |
| SO₃ | | 0 - 1 |
| SeO₂ | 0 - 1 | |
| C | 0-1 | |
| M^{I} M^{III} Y^{II} , wobei M^{I} = 0,1 - 1 Cu⁺ und/oder Ag⁺, M^{III}= In³⁺ und/oder Ga³⁺, Y^{II}₂ = S²⁻ und/oder Se²⁻ mit wenigstens 0,1 Gew.-% des Oxides (M₂O₃) des oder der M^{III}, das/die in M^{I} M^{III} Y^{II}₂ vorliegt/vorliegen, und mit wenigstens 0,2 Gew.-% des Oxides, des oder der Y^{II}, das/die in M^{I} M^{III} Y^{II}₂ vorliegt/vorliegen, sowie ggf. übliche Läutermittel in üblichen Mengen | | |

3. Optisches Farbglas,
**dadurch gekennzeichnet,**
**daß** es zusätzlich enthält (in Gew.-% auf Oxidbasis)
| | |
|---|---|
| MgO | 0 - 4 |
| CaO | 0 - 10 |
| BaO | 0 - 10 |
| SrO | 0 - 10 |
| P₂O₅ | 0 - 10 |
sowie ggf. übliche Läutermittel in üblichen Mengen

4. Optisches Farbglas nach wenigstens einem der Ansprüche 1 bis 3,
**dadurch gekennzeichnet,**
**daß** es zwischen 0,1 und 0,5 Gew.-% Culn(Se₁₋ₓSₓ)₂ enthält

5. Optisches Farbglas nach wenigstens einem der Ansprüche 1 bis 4 mit einer Kantenwellenlänge λ_{c} zwischen 360 nm und 1200 nm.

6. Optisches Farbglas nach wenigstens einem der Ansprüche 2 bis 4 mit einer Kantenwellenlänge λ_{c} zwischen 400 nm und 1200 nm.

7. Optisches Farbglas nach Anspruch 1,
**dadurch gekennzeichnet,**
**daß** es zwischen 0,1 und 0,5 Gew.-% CuAl(Se₁₋ₓSₓ)₂ enthält.

8. Optisches Farbglas nach Anspruch 7 mit einer Kantenwellenlänge λ_{c} zwischen 360 nm und 460 nm.

9. Verfahren zur Herstellung von optischen Farbgläsern des Zusammenset zungsbereichs
| | |
|---|---|
| SiO₂ | 50 - 62 |
| K₂O | 10 - 25 |
| Na₂O | 0 - 14 |
| MgO | 0 - 4 |
| CaO | 0 - 10 |
| BaO | 0 - 10 |
| SrO | 0 - 10 |
| P205 | 0 - 10 |
| Al₂O₃ | 0 - 2 |
| B₂O₃ | 3 - 5 |
| ZnO | 13,5 - 37 |
| F | 0 - 1 |
| TiO₂ | 0 - 7 |
| In₂O₃ | 0 - 2 |
| Ga₂O₃ | 0 - 2 |
| SO₃ | 0 - 1 |
| SeO₂ | 0 - 1 |
| C | 0 - 1 |
| M^{I} M^{III} Y^{II}₂ | 0,1 - 1 |
| wobei M^{I} = Cu⁺, Ag⁺ M^{III} = In³⁺, Ga³⁺, Al³⁺ Y^{II} = S²⁻, Se²⁻ | |
mit wenigstens 0,1 Gew.-% des Oxides (M₂O₃) des oder der M^{III}, das/die in M^{I} M^{III} Y^{II}₂ vorliegt/vorliegen, und mit wenigstens 0,2 Gew.-% des Oxides, des oder der Y^{II}, das/die in M^{I} M^{III} Y^{II}₂ vorliegt/vorliegen
sowie ggf. übliche Läutermittel in üblichen Mengen
mit den Verfahrensschritten Gemengezubereitung, Schmelzen des Glases, Kühlen, Tempern,
wobei dem Gemenge 0,1 - 4 Gew.-% ZnS und/oder ZnSe zugesetzt werden.

10. Verwendung eines Glases nach wenigstens einem der Ansprüche 1 bis 8 oder eines nach dem Verfahren gemäß Anspruch 9 hergestellten Glases
als optisches Steilkantenfilter.

11. Optisches Steilkantenfilter bestehend aus einem Glas nach wenigstens einem der Ansprüche 1 bis 8 oder einem nach dem Verfahren gemäß Anspruch 9 hergestellten Glas.
